# EUROPEAN PATENT APPLICATION

(11) **EP 2 996 083 A1**
(43) Date of publication of application: **16.03.2016**
(21) Application number: 14193555.1
(22) Date of filing: 17.11.2014
(51) Int. Cl.: G06Q 30/06

(54) **Customized processing method and system for ordering an electronic product**

(30) Priority: 09.09.2014 TW 103130920
(71) Applicant: Changshu Inforay Technology Co., Ltd., Changshu City, Jiangsu 215500 (CN)
(72) Inventor: Shih-Hao, Tsou, 215500 Changshu City (CN)
(74) Representative: Chaillot, Geneviève

(57) **Abstract**

A customized processing method for ordering electronic product includes an order receiving process, a searching process, an information creating process, an order preparing process, a material preparing process, and a coding process. A user information file having an user information and a connecting identification code of each user is created. The connecting identification code is written or burned into at least one electronic product that is ordered by the user. The electronic product having the connecting identification code can be automatically paired to other electronic product having the same connecting identification code.

## Description

This Non-provisional application claims priority under 35 U.S.C. §119(a) on Patent Application No. 103130920 filed in Republic of China (R.O.C.) on Sep. 9, 2014, the entire contents of which are hereby incorporated by reference.

### BACKGROUND

### 1. Technical Field

The disclosure relates to a processing method and a processing system for ordering product, in particularly, to a customized processing method and a customized processing system for ordering at least one electronic product.

### 2. Description of Related Art

Smart appliance is an electronic application technology, which capable of monitor or control electronic products by a remote device. In the past, the electronic product is connected to the remote device by a signal transmission line or a cable to make it to communicate. By way of signal transmission line connections, in addition to the distance will be limited outside, and there are too much signal transmission line will cause unsightly wiring due to many electronic products have to be monitored.

With the advances in wireless transmission technology, the concept of the smart appliances is gradually feasible. Bluetooth, WiFi and Zigbee are several of the wireless techniques applied in the smart appliances field, which are most commonly used in recent years. These wireless technologies have their advantages and disadvantages, such as Bluetooth has the advantage of easy pairing and connection, but has the disadvantage of only eight of electronic product can be connected to each other; WiFi has the advantage of high speed transmission, but has the disadvantage of high power consumption; Zigbee has the advantage of long transmission distance, large number of connections, and has a mesh network functions.

However, the consumer is most concerned about pairing and installing problems except to the above advantages and disadvantages. Smart appliance is usually connected to various electronic products through a host, so each new electronic product to add into the smart appliances must be through "Setting" in order to connect to the host. Consumers are not familiar with the procedures to set smart appliances, so as to reduce the use of smart appliances wishes. Furthermore, consumers still have to spend time to set smart appliance, and therefore wasted a lot of time even if consumers are familiar with the procedures to set smart appliances.

Therefore, how to provide a customized processing method and a customized processing system for ordering at least one electronic product so that the different electronic products of the smart appliances can be easily paired and connected to each other is currently one of the important issues.

### SUMMARY OF THE INVENTION

In view of the foregoing, the invention is to provide a customized processing method for ordering at least one electronic product and its application system, which is easy to install and pair the electronic products to build a smart appliances network after ordering by a consumer.

To achieve the above, the present application provides a customized processing method for ordering at least one electronic product, which includes an order receiving process, a searching process, a file creating process, a file storing process, an order preparing process, a material preparing process, and a coding process.

The order receiving process is receiving an order information from the client. The order information has a basic information and a requirement information. The searching process is searching an user information corresponding to the basic information of the order information in a database. The file creating process is performed if the user information corresponding to the basic information is nonexistent in the database. The file creating process is creating an user information file according to the basic information and a connecting identification code. The file storing process is storing the user information file created in the file creating process into the database.

The order preparing process is extracting the order information from the client and the user information file stored in the database. The material preparing process is preparing at least one electronic device in accordance with the requirement information of the order information. The coding process is writing the connecting identification code of the user information file into the electronic device.

In one embodiment, the electronic product is connected to another electronic product in accordance with the same connecting identification code.

In one embodiment, the order preparing process is performed after the searching process if the user information exists in the database.

In one embodiment, the searching process is comparing the basic information of the order information with the user information of a plurality of the user information files stored in the database.

To achieve the above, the present application is provides a customized processing system for ordering at least one electronic product, which includes a database, an order receiving module, a central processing module, a searching module, a file creating module, a material preparing module, and a coding module.

The database stores a plurality of user information files, which at least has an user information and a connecting identification code. The order receiving module receives an order information having a basic information and a requirement information. The central processing module receives the order information transmitted from the order receiving module. The searching module receives the basic information of the order information transmitted by the central processing module, and generates a positive signal or a negative signal in accordance with comparing the basic information with the user information of the user information files stored in the database. The file creating module adds an user information file having the basic information and a connecting identification code in accordance with the negative signal. The material preparing module receives the order information, and prepares at least one electronic product in accordance with the requirement information of the order information. The coding module receives the order information and the user information file, and writes the connecting identification code of the user information file into the electronic product in accordance with the requirement information of the order information.

As mentioned above, the customized processing method and the customized processing system is writing the connecting identification code into the electronic product before shipping. Therefore, the electronic product with the connecting identification code can be easily connected to another electronic product with the same connecting identification code or joint a closed network with the same connecting identification code when the client providing the power source to the electronic product.

### BRIEF DESCRIPTION OF THE DRAWINGS

The parts in the drawings are not necessarily drawn to scale, the emphasis instead being placed upon clearly illustrating the principles of at least one embodiment. In the drawings, like reference numerals designate corresponding parts throughout the various diagrams, and all the diagrams are schematic.
FIG. 1 is an application architecture diagram showing a customized processing system for ordering at least one electronic product according to an embodiment of the invention.
FIG. 2 is a system block diagram showing the customized processing system for ordering at least one electronic product according to an embodiment of the invention.
FIG. 3 is a flow chart showing a customized processing method for ordering at least one electronic product according to an embodiment of the invention.

### DETAILED DESCRIPTION

Reference will now be made to the drawings to describe various inventive embodiments of the present disclosure in detail, wherein like numerals refer to like elements throughout.

In the embodiment, it is illustrated by shopping online for ordering at least one electronic product by a consumer. The electronic products may be includes television, refrigerator, air conditioner, audio system, switch, or power outlet using in a smart appliances. In addition, the electronic products of the smart appliances may be connected by Bluetooth, WiFi, Zigbee, or Z wave.

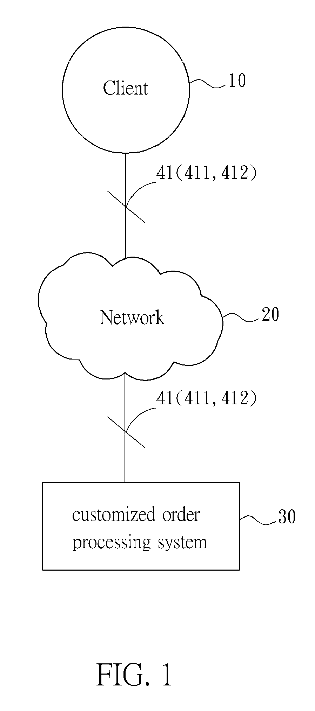

Referring to FIG. 1, a client 10 is connected to internet mall through a network 20 by a computer or a mobile device for shopping online. An order information 41 is transmitted to a customized order processing system 30 to confirm the order after purchase the products and input a basic information. In the embodiment, the order information 41 at least includes a basic information 411 and a requirement information 412. The requirement information represents the product category and amount order by the client 10.

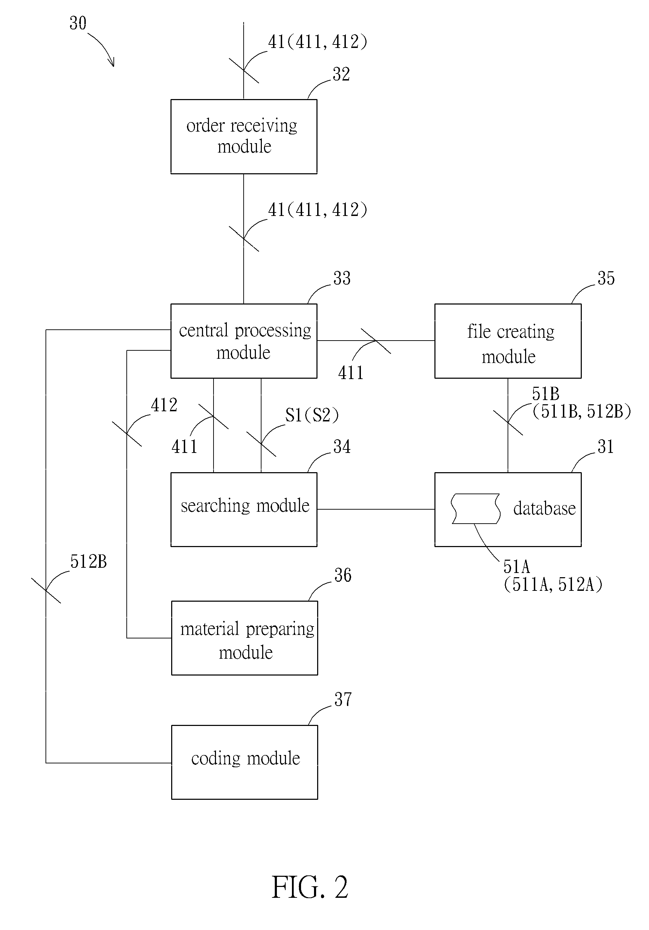

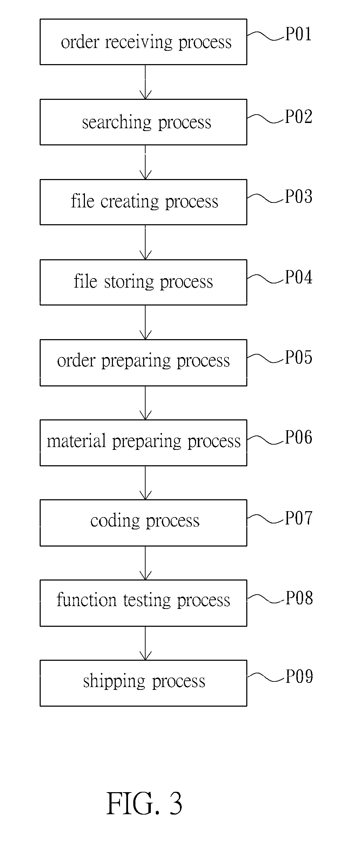

Referring FIG. 2 and FIG. 3, wherein FIG. 2 is a system block diagram showing the customized processing system and FIG. 3 is a flow chart showing the customized processing method.

As shown in FIG. 2, the customized order processing system 30 includes a database 31, an order receiving module 32, a central processing module 33, a searching module 34, a file creating module 35, a material preparing module 36, and a coding module 37. The database 31 stores a plurality of user information files 51A. Each of the user information file at least has an user information 511A and a connecting identification code 512A.

As shown in FIG. 3, the customized processing method includes an order receiving process P01, a searching process P02, a file creating process P03, a file storing process P04, an order preparing process P05, a material preparing process P06, a coding process P07, a function testing process P08, and a shipping process P09.

The order receiving process P01 is to receive the order information 41 from the client 10. In the order receiving process P01, the order information 41 is received by the order receiving module 32 and then delivered to the central processing module 33.

The searching process P02 is to search the user information 511A, which corresponding to the basic information 411 of the order information 41 in the database 31. In the embodiment, the order information 41 is transmitted to the searching module 34 by the central processing module 33. Then, the searching module 34 is comparing the basic information 411 of the order information 41 with the user information 511A of a plurality of the user information files 51A stored in the database 31. The searching module 34 generates a positive signal S1 to transmit to the central processing module 33 if the corresponding user information 511A exists in the database 31. In addition, the searching module 34 generates a negative signal S2 to transmit to the central processing module 33 if the corresponding user information 511A is nonexistent in the database 31. The central processing module 33 enables the file creating module 35 to perform the file creating process P03 after receiving the negative signal S2. In addition, the central processing module 33 enables the material preparing module 36 and the coding module 37 to perform the order preparing process P05.

The file creating process P03 is to create an user information file 51B in accordance with the basic information 411 of the order information 41 and a connecting identification code 512B. Then, the file storing process P04 is performed that the user information file 51B is stored into the database 31. In the embodiment, during the file creating process P03, the user information file 51B is created by the file creating module 35. The connecting identification code 512B may be generated by the system. Then the order preparing process P05 is performed when the user information file 51B stored in the database 31.

The order preparing process P05 is to extract the order information 41 and the user information file 51B, which is corresponding to the basic information 411 of the order information 41. In the embodiment, the order information 41 and the user information file 51B are extracted by the central processing module 33 to store in a register. Then, the material preparing process P06 is performed.

The material preparing process P06 is to prepare at least one electronic device in accordance with the requirement information 412 of the order information41. In the embodiment, the material preparing module 36 is receiving the requirement information 412 of the order information 41, which is stored in the register by the central processing module 33, and preparing the electronic product in accordance with the requirement information 412 of the order information 41. The electronic product may be prepared by automation apparatus or artificial. Then, the coding process P07 is performed.

The coding process P07 is to write the connecting identification code 512B of the user information file 51B into the electronic device ordered by client 10. In the embodiment, the coding module 37 receives the requirement information 412 of the order information 41 stored in the register and the connecting identification code 512B of the user information file 51B. Then, the connecting identification code 512B is written into the corresponding electronic product by the coding module 37 in accordance with the requirement information 412.

The function testing process P08 is to test the electronic product with the connecting identification code 512B. In the testing process P08, the function test at least includes connection test and data transmission test. The electronic product is to pair and connect to another electronic product with the same connecting identification code 512B. The shipping process P09 is performed when the electronic product with the connecting identification code 512B has been confirmed to be qualified.

In the embodiment, the connecting identification code of the Zigbee protocol may be a personal area network identifiers (PAN IDs). A closed domain of the smart appliances can be built by the connecting identification code that the electronic product with the same connecting identification code can be connected to each other in the closed domain. In other embodiment, the closed domain can be built under the protocol of Bluetooth, WiFi, or Z wave, and the connecting identification code is adapted to these protocols. Moreover, the connecting identification code is for connecting different electronic product to build the closed domain to form the smart appliances that the connecting identification code even can be an ID number of the client, a specific string.

The electronic product received by the client can be automatically communicated with the surrounding electronic product, and connected to the electronic product with the same connecting identification code when the electronic product to be placed in the appropriate location and plugged in a power outlet.

The following is an example to illustrate the actual application of customized order processing methods. However, it is not limited to embodiments of the present invention.

As shown in FIG. 1, a consumer utilizes a laptop to connect to the network 20 at the client 10, and shopping electronic product related smart appliances on an internet mall. The consumer sends the order information after fill the subscriber information, the recipient information, the categories and purchase quantity of the electronic product. In the embodiment, the consumer orders a power outlet, a switch, and a smart appliances host.

The customized order processing method is performed when the customized order processing system 30 received the order information. The connecting identification code is writing into the switch, the power outlet, and the smart appliances host. The switch, the power outlet, and the smart appliances host are packaged and shipping to the consumer after function test.

The consumer can place the switch, the power outlet, and the smart appliances host in an appropriate location and provides a power to the switch, the power outlet, and the smart appliances host. In the embodiment, the host is installed in a living room, the switch and the power outlet are installed on a wall, respectively. The switch, the power outlet, and the smart appliances host are automatically pairing to each other in accordance with the same connecting identification code to build a closed domain. A mobile device can be connected to the smart appliances host to monitor or control the switch and the power outlet.

Then, after a period of time, The consumer utilizes a laptop to connect to the network 20 at the client 10, and order an audio system on the internet mall. Same as the described above, the customized order processing method is performed when the customized order processing system 30 received the order information. The audio system is shipping after the connecting identification code is written therein.

The audio system can be placed in an appropriate location and plugged in a power outlet to start up. The audio system is automatically paired and connected to the host, switch, and power outlet with the same connecting identification code to automatically join into the smart appliances network.

As mentioned above, the customized processing method for ordering the electronic product and its application system is writing the connecting identification code into the electronic product before shipping. Therefore, the electronic product with the connecting identification code can be easily connected to another electronic product with the same connecting identification code or joint a closed network with the same connecting identification code when the client providing the power source to the electronic product.

Even though numerous characteristics and advantages of certain inventive embodiments have been set out in the foregoing description, together with details of the structures and functions of the embodiments, the disclosure is illustrative only. Changes may be made in detail, especially in matters of arrangement of parts, within the principles of the present disclosure to the full extent indicated by the broad general meaning of the terms in which the appended claims are expressed.

## Claims

1. A customized processing method for ordering at least one electronic product, comprising:
an order receiving process, which is receiving an order information having a basic information and a requirement information;
a searching process, which is searching an user information corresponding to the basic information in a database;
a file creating process, which is creating an user information file in accordance with the basic information and a connecting identification code if the user information corresponding to the basic information is nonexistent in the database;
a file storing process, which is storing the user information file into the database after the file creating process;
an order preparing process, which is extracting the order information and the user information file;
a material preparing process, which is preparing at least one electronic device in accordance with the requirement information of the order information; and
a coding process, which is writing the connecting identification code of the user information file into the electronic device.

2. The customized processing method of claim 1, wherein the electronic device is paired and connected to another electronic device with the same connecting identification code.

3. The customized processing method of claim 2, wherein a customer domain is built by the electronic devices with the same connecting identification code.

4. The customized processing method of claim 2, wherein the connecting identification code is applied to Bluetooth, Wifi, Zigbee, or Z wave.

5. The customized processing method of claim 1, wherein the order preparing process is performed after the searching process if the user information corresponding to the basic information existing in the database.

6. The customized processing method of claim 1, wherein the searching process further comprising:
comparing the basic information with the user information of a plurality of the user information files in accordance with the basic information of the order information.

7. A customized processing system for ordering at least one electronic product, comprising:
a database, which stores a plurality of user information file at least having an user information and a connecting identification code;
an order receiving module, which receives an order information having a basic information and a requirement information;
a central processing module, which receives the order information transmitted by the order receiving module;
a searching module, which receives the basic information of the order information transmitted by the central processing module, and generates a positive signal or a negative signal in accordance with comparing the basic information with the user information of the user information files stored in the database;
a file creating module, which adds an user information file having the basic information and a connecting identification code in accordance with the negative signal;
a material preparing module, which receives the order information, and prepares at least one electronic product in accordance with the requirement information of the order information; and
a coding module, which receives the order information and the user information file, and writes the connecting identification code of the user information file into the electronic product in accordance with the requirement information of the order information.

8. The customized processing system of claim 7, wherein the positive signal or the negative signal generated by the searching module is transmitted to the central processing module.

9. The customized processing system of claim 8, wherein the central processing module enables the file creating module when receiving the negative signal.

10. The customized processing system of claim 8, wherein the central processing module enables the material preparing module and the coding module when receiving the positive signal.
